(19) Europäisches Patentamt
European Patent Office
Office européen des brevets

(11) **EP 3 121 777 A1**

(12) **EUROPEAN PATENT APPLICATION**

(43) Date of publication:
**25.01.2017 Bulletin 2017/04**

(51) Int Cl.:
***G06Q 10/10*** *(2012.01)*

(21) Application number: **16153998.6**

(22) Date of filing: **03.02.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.07.2015 IN 2734MU2015**

(71) Applicant: **Tata Consultancy Services Limited Maharashtra (IN)**

(72) Inventors:
 • **SINGH, Harbhaja n Mohan**
 **600058 Chennai, Tamil Nadu (IN)**
 • **JAYASEKAR, Mani**
 **600058 Chennai, Tamil Nadu (IN)**
 • **PONNAN, Sureshba bu**
 **600073 Chennai, Tamil Nadu (IN)**
 • **VADIVEL, Padmana ban**
 **600097 Chennai, Tamil Nadu (IN)**

(74) Representative: **Goddar, Heinz J.**
 **Boehmert & Boehmert**
 **Anwaltspartnerschaft mbB**
 **Patentanwälte Rechtsanwälte**
 **Pettenkoferstrasse 20-22**
 **80336 München (DE)**

(54) **SYSTEMS AND METHODS FOR DYNAMIC ALLOCATION OF MOBILE AGENTS**

(57) Systems and methods for dynamic allocation of mobile agents to attend to customer needs by scheduling appointments between customers and mobile agents, the system including a receiving module, a relationship module, a matching module, an assignment module and a calendar module. The receiving module is configured to extract customer needs from received customer requests and the relationship module is configured to extract the relationship scores with respect to customer raising customer requests and the matching module is configured to match customer needs with agent profiles to identify a mobile agent, the identified mobile agent is subjected to determination by assignment module configured to evaluate the appropriateness of identified mobile agent. The calendar module is configured to check availability of mobile agent by prompting the mobile agent to confirm the availability and receiving a conformation from mobile agent in response to prompting and scheduling an appointment of customer with mobile agent.

Figure 3

**Description**

CROSS-REFERENCE TO RELATED APPLICATIONS AND PRIORITY

The present application also claims benefit from Indian Complete Patent Application No. 2734/MUM/2015, filed on July 20th, 2015, the entirety of which is hereby incorporated by reference.

TECHNICAL FIELD

The embodiments herein generally relates to systems and methods for dynamic allocation of mobile agents, more particularly, to dynamic allocation of mobile agents and the management of such allocation on customer requests.

BACKGROUND

The statements in this section merely provide background information related to the present disclosure and may not constitute prior art.

Continuous growth in mobile wireless communication has presented flexibility in managing resources including mobile agents to provide service to its customer base. Effective and efficient management of mobile agents include scheduling of requests raised by part or all of customer base with mobile agents on the basis of a variety of factors ranging from distance to be travelled, scheduled appointment time and customer requirements.

Such systems for mobile resource allocation allow organizations/companies employing the mobile resources to offer convenient appointments to customers, make quality commitments in regards to the customer need and reduce time and effort needed to harmonize the process.

However, such systems of dynamic allocations for mobile agents are solely based to enhance customer satisfaction and reduce the allocation and commitment cost for the organization without taking into consideration satisfaction of the mobile agents. The current systems in place for allocation of mobile agents takes into consideration factors such as distance to be travelled, the customer requirements, agent skillset etc. without taking number of customers and details of customer portfolio into account. Such lapse in consideration causes dissatisfaction amongst mobile agents due to discrepancy in the number of customers and the kind of customer portfolio assigned to mobile agents.

Thus, there exists a need for a system that allocates the mobile agents to customers in the event of customer(s) raising appointment request(s) without significantly burdening the customer and mobile agents while, at the same time, eliminating the need for complicated infrastructure implementations.

SUMMARY

This summary is provided to introduced aspects related to systems and methods for dynamic allocation of mobile agents to attend to customer requests (customer appointments), and the aspects are further described below in detailed description. This summary is not intended to identify essential features of the claimed subject matter nor is it intended for use in determining or limiting the scope of the claimed subject matter.

Systems and methods for dynamic allocation of mobile agents to attend to customer requests are described for enhancing customer experience and augment satisfaction amongst mobile agents. In an embodiment, systems and methods for dynamic allocation of mobile agents are disclosed. The system can include one or more processors, memory operatively coupled to one or more processors for storing system modules that can be configured to dynamically allocate mobile agents to attend to customer requests while maintaining uniformity. In an embodiment, system of the present invention comprises of a receiving module that may be configured to receive customer requests for scheduling appointments with mobile agents and evaluate the customer needs from received customer requests; a relationship module that may be configured to maintain a record of relationship scores with respect to customers and extracting relationship scores with respect to customers raising customer requests; a matching module that may be configured to maintain a record of agent profiles and carry out a match between customer needs and agent profile; an assignment module that may be configured to determine the suitability of mobile agent to be allocated another customer requests so as to allocate uniform number of customers and maintain equal mean relationship score amongst mobile agents; and a calendar module that may be configured to check the availability of mobile agent by getting confirmation status from mobile agent and thereafter schedule an appointment.

In an embodiment, system of present disclosure may further include a storage module that may be configured to maintain a record of number of customers and mean relationship score with respect to number of customer allocated to mobile agents; and a status module that may be configured to analyze the uniformity of customer allocation in terms of numbers and mean relationship score to mobile agents for a pre-determined period and such analysis is done in real-time.

In yet another embodiment, the method for allocating at least one mobile agents to at least one customers carried out in steps on a system, the method comprising: receiving customer requests, by a receiving module, for scheduling appointments with mobile agents and evaluating the customer needs from received customer requests; maintaining a record, by a relationship module, of relationship scores with respect to customers and extracting relationship scores with respect to the customers; maintaining a record of agent profiles, by a matching module and carrying out a match between customer needs and agent profile to identify and select the mobile agent; determining, by an assignment module, if the mobile agent is suitable to be allocated to attend customer requests wherein such determination is carried out to allocate uniform number of customers and maintain equal mean relationship score amongst mobile agents; and checking, by a calendar module, for the availability of the mobile agent and only after getting confirmation from mobile agent, an appointment is scheduled.

BRIEF DESCRIPTION OF THE DRAWINGS

The foregoing summary, as well as the following detailed description of preferred embodiments, are better understood when read in conjunction with the appended drawings. For the purpose of illustrating the invention, there is shown in the drawings exemplary constructions of the invention; however, the invention is not limited to the specific methods and system disclosed. In the drawings:

Figure 1 illustrates a network implementation of a system for dynamic allocation of mobile agents to attend to customer appointment request according to an embodiment of the present invention;
Figure 2 illustrates the system in accordance with an embodiment of the present disclosure;
Figure 3 illustrates a method for dynamic allocation of mobile agents to attend to customer appointment requests according to an embodiment of the present invention.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

DETAILED DESCRIPTION

Systems and methods for dynamically allocating mobile agents to attend to customer appointment requests are described. Different customers with different or similar needs for advisory actions in financial related matters raise requests for meeting mobile agents. The appointment of mobile agents to attend to customer requests helps the customers to understand financial solutions better and it enhances customer experience and augments satisfaction amongst mobile agents and add to the skill set of mobile agents. According to embodiments of present disclosure, a customer connected to the system through the customer device may send a customer request for scheduling an appointment with a mobile agent. In a first step, the system may receive such customer requests and evaluate for identifying the customer needs. The customer needs, after being identified, may then be matched for an agent profile to identify and select a mobile agent capable of understanding and addressing customer needs. The level of matching may be pre-defined based on the parameters of customer needs and the targeted agent profile i.e. the mobile agent.

Subsequently, the matched agent profile may be subjected to determination of uniformity in allocation of number of customers and mean relationship score with respect to number of customers. According to embodiments of present disclosure, the determination of uniformity in allocation of number of customers and mean relationship score with respect to number of customers may lead to efficiency of allocation of mobile agents and increase satisfaction amongst the mobile agents. Based on the determination, a quick check may be performed for confirming the availability of mobile agent. Such confirmation may be sent to the mobile agent and only after such confirmation, the system may allocate the mobile agent to attend to a customer request.

Exemplary embodiments are described with reference to the accompanying drawings. While examples and features of disclosed principles are described herein, modifications, adaptations, and other implementations are possible without departing from the spirit and scope of the disclosed embodiments. It is intended that the following detailed description be considered as exemplary only, with the true scope and spirit being indicated by the following claims.

The words "comprising"", "having", "containing", and "including", and other forms thereof, are intended to be equivalent in meaning and be open ended in that an item or items following any one of these words is not meant to be an exhaustive listing of such item or items, or meant to be limited to only the listed item or items.

The following description and drawings are illustrative and are not to be construed as limiting. Numerous specific details are described to provide a thorough understanding. However, in certain instances, well known or conventional details are not described in order to avoid obscuring the description. References to one or an embodiment in the present disclosure are not necessarily references to the same embodiment; and, such references mean at least one.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described. In the following description for the purpose of explanation and understanding reference has been made to numerous embodiments for which the intent is not to limit the scope of the invention.

The elements illustrated in the Figures interoperate as explained in more detail below. Before setting forth the detailed explanation, however, it is noted that all of the discussion below, regardless of the particular implementation being described, is exemplary in nature, rather than limiting. For example, although selected aspects, features, or components of the implementations are depicted as being stored in memories, all or part of the systems and methods consistent with the attrition warning system and method may be stored on, distributed across, or read from other machine-readable media.

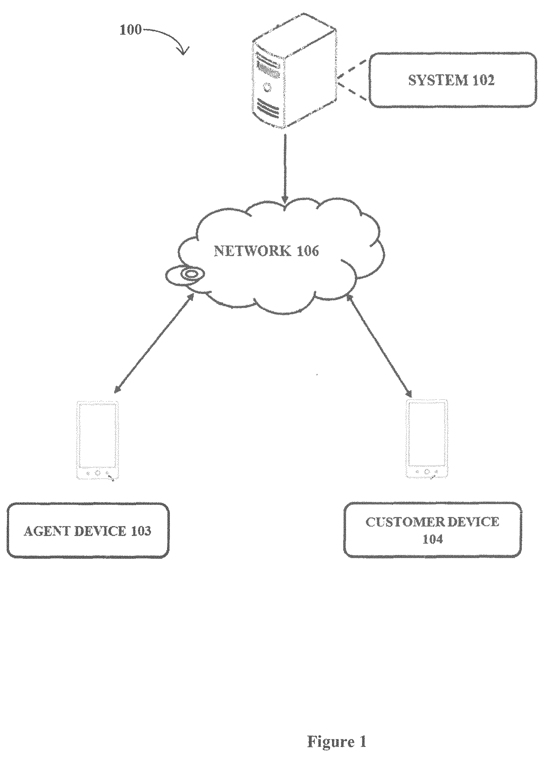

Referring to Figure 1, a network implementation 100 of a system 102 for dynamic allocation of mobile agents connected through agent device(s) 103 to attend to customer requests connected through customer device(s) 104 is illustrated, in accordance with an embodiment of the present disclosure. In one embodiment, the system 102 facilitates the dynamic allocation of mobile agents to attend to customer needs on the basis of customer requests. Although the present subject matter is explained considering the system 102 is implemented as a software application on a server, it may be understood that the system 102 may also be implemented on a variety of computing systems, such as a laptop computer, a desktop computer, a notebook, a workstation a mainframe computer, a server, a network server, a tablet, a mobile phone, and the like. In one implementation, the system 102 may be implemented in a cloud-based environment. According to embodiments, the agent device 103 and the customer device 104 may be communicatively coupled to the system 102 through a network 106.

In one implementation, the network 106 may be a wireless network, a wired network or a combination thereof. The network 106 can be implemented as one of the different types of networks, such as intrarnet, local area network (LAN), wide area network (WAN), the internet, and the like. The network 106 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further the network 106 may include a variety of network devices, including routers, bridges, servers, computing devices, storage devices, and the like.

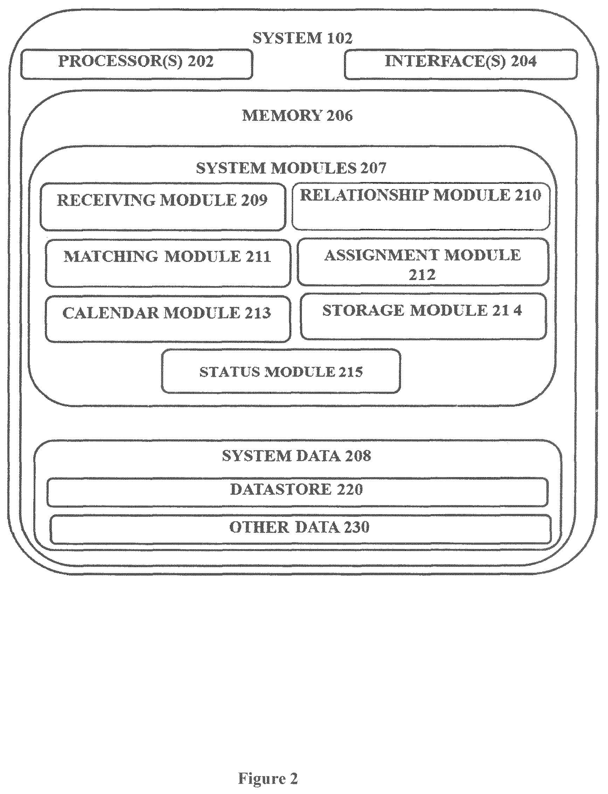

Referring now to Figure 2, the system 102 is illustrated in accordance with an embodiment of the present disclosure. In one embodiment, the system 102 may include at least one processor 202, an input/output (I/O) interface 204, and a memory 206. The at least one processor 202 may be implemented as one or more microprocessors, microcomputers, microcontrollers, digital signal processors, central processing units, state machines, logic circuitries, and/or any devices that manipulate signals based on operational instructions. Among other capabilities, the at least one processor 202 is configured to fetch and execute computer-readable instructions or modules stored in the memory 206.

The I/O interface 204 may include a variety of software and hardware interfaces, for example, a web interface, a graphical user interface, and the like. The I/O interface 204 may allow the system 102 to interact with the mobile agent(s) and customer(s) through respective agent device(s) 103 and customer device(s) 104. The I/O interface 204 can facilitate multiple communications within a wide variety of networks and protocol types, including wired networks, for example, LAN, cable, etc., and wireless networks, such as WLAN, cellular, or satellite. The I/O interface 204 may include one or more ports for connecting a number of devices to one another or to another server.

The memory 206 may include any computer-readable medium or computer program product known in the art including, for example, volatile memory, such as static random access memory (SRAM) and dynamic random access memory (DRAM), and/or nonvolatile memory, such as read only memory (ROM), erasable programmable ROM, flash memories, hard disks, optical disks, a compact disks (CDs), digital versatile disc or digital video disc (DVDs) and magnetic tapes. The memory 206 may include system modules 207 and system data 208.

The system modules 207 includes routines, programs, objects, components, data structures etc., which perform particular tasks or implement particular abstract data types. In one implementation, the system modules 207 may include, a receiving module 209, a relationship module 210, a matching module 211, an assignment module 212, a calendar module 213, a storage module 214 and a status module 215.

System data 208, amongst other things, may serve as a repository for storing data processed, received and generated by one or more of the system modules 207. System data 208 may include data store 220 and other data 230. The other data 230 may include data generated as a result of the execution of one or more modules.

In an embodiment, receiving module 209 may be configured to receive customer requests for scheduling an appointment with mobile agent(s). The customer request may comprise of a problem statement, availability of places and timings of the customer, customer contact details and the consent for a personal visit by mobile agent. The receiving module 209 may be configured to receive and leverage customer requests via prevalent digital channels including without limitation smartphones, tablets, desktops, wearable devices, augmented reality rendering devices, hand-held and portable devices for receiving consumer needs. The receiving module 209 also evaluates the customer needs from the received customer requests. The receiving module 209 can decipher the needs of customers to enable matching module 211 to effectively address the customer needs. The receiving module 209 may further be configured to extract the customer profile from the customer requests received. In an embodiment, customer profile includes without limitations the contact details of the customer, number of dependents, residential and official address of the customer.

In an embodiment, relationship module 210 may be configured to maintain the records of relationship scores (described later) of plurality of customers associated with the system 102. The relationship scores are assigned to customers by the system 102. In an embodiment, the relationship score with respect to a particular customer is a function of variables including an account summary (total value of assets-both liquidated and unliquidated assets), tax summary, financial transactions, details of assets, details of loans availed, credit scoring of the customer, past credit history of the customer, Risk appetite of customer, customer present investments and future investment plans, Investment Tenure, Insurance details, activeness of customer, total income and expense statements, customer expenditure profile and growth of income per year. The relationship module 210 extracts the relationship scores of all the customers raising customer requests for scheduling an appointment with mobile agent(s). The relationship module 210 can aggregate all such relationship scores for all the customer requests received by receiving module 209 for assignment module 212.

In an embodiment, matching module 211 may be configured to store agent profiles associated with mobile agents and match customer needs associated with each of the customers based on evaluated customer needs by receiving module 209 with the agent profiles. In an embodiment, agent profile includes one or more of skill, a certification, a grouping, a geographic allocation and a rating associated with the mobile agent. The matching module 211 ensures that mobile agents who can address the customer needs are matched with customers. In an embodiment, the matching module 211 ensures that customer needs are matched against the skillset of mobile agents to facilitate the addressing of customer needs.

In an embodiment, assignment module 212 may be configured to determine the suitability of a matched mobile agent by the matching module 211 with the customer needs. In service industries, it becomes essential to manage the expectations of customers and at the same time to keep the mobile agents satisfied. In continuation, the management of work load and to enhance the development of skills, it becomes inevitable to distribute customers uniformly. The assignment module 212 may further be configured to maintain the uniformity of customer allocation to mobile agents in terms of number of customers allocated amongst mobile agents and maintain equal mean relationship score amongst mobile agents. In an embodiment, allocation of equal mean relationship score means the allocation of equal net worth of customers across the mobile agents. In an embodiment, the allocation of equal net worth of customers across mobile agents includes both the active and passive customers.

The mean relationship score is represented by equation (1) with N being the no. of customers.

$$\text{Mean relationship score} =$$

$$(\text{Relationship score of Customer1} + \text{Relationship score of customer 2} + \ldots \ldots \text{Relationship}$$

$$\text{score of customer N})/N \qquad (1)$$

The assignment module 212 may further be configured to calculate the threshold mean relationship score. In an embodiment, the threshold mean relationship score is valid for a pre-determined period. The threshold mean relationship score is the upper value of mean relationship score which is calculated dynamically by the assignment module 212 for mobile agents for a pre-determined period.

The assignment module 212 may further be configured to allocate the customers to mobile agent only if subsequent to such allocation, value of mean relationship score becomes equal to the value of threshold mean relationship score. Such a criteria becomes essential to avoid situations of discomfort and dissatisfaction amongst mobile agents due to uneven allocation of customer portfolios.

In an embodiment, calendar module 213 may be configured to determine the availability of matched and assignment module 212 approved mobile agent. The determination of availability of mobile agent becomes inevitable to avoid clashes of two customer appointments scheduled at the same time or in the event of non-availability of mobile agent due to any scheduled or planned holidays. The calendar module 213 attempts to negate the scenarios of an appointment scheduling which leads to inconvenience to both customers and mobile agents.

In an embodiment, storage module 214 may be configured to maintain a record of number of customers allocated to each mobile agent amongst mobile agents. Furthermore, the storage module 214 may further be configured to maintain a record of mean relationship score with respect to number of customer allocated to each mobile agent. In an embodiment, such mean relationship score for a mobile agent is calculated in real-time.

In an embodiment, status module 215 may be configured to evaluate maintenance of uniformity with number of customers allocated amongst mobile agents. Furthermore, the status module 215 may be configured to analyze the uniformity of customer allocation in terms of maintenance of mean relationship score amongst mobile agents. In an embodiment, such maintenance of mean relationship score helps the mobile agents to attend to customer requests avoiding any clashes in meetings, attending to equal number of customer and handling equal mean relationship score with respect to customers.

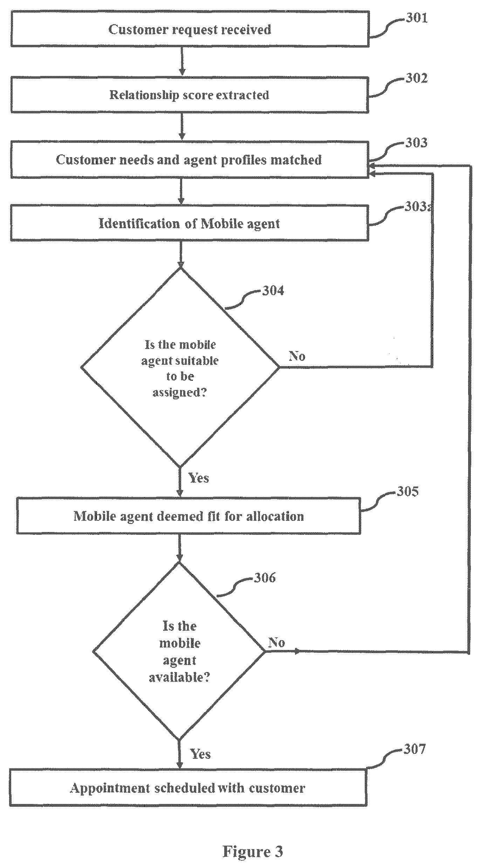

Referring now to Figure 3 illustrates detailed working of the system 102, in accordance with an embodiment of the present disclosure. The system 102 of the present disclosure can be configured to perform steps as illustrated in an exemplary flow diagram of Figure 3. The system 102 is configured for dynamic allocation of mobile agents to attend to customer request by scheduling an appointment with the customer. As described earlier with reference to Figure 1, mobile agent(s) and customer(s) may be coupled to the system 102 through respective agent device(s) 103 and customer device(s) 104.

With reference to Figure 3, at step 301, the receiving module 209 of the system 102 receives customer request(s) for scheduling customer appointment(s) sent by customer device(s) 104 connected through network 106 to the system 102. The receiving module 209 evaluates the customer needs and extracts customer profile(s) from the received customer requests.

At step 302, the relationship module 210 extracts the relationship scores of all the customer raising customer requests for scheduling an appointment with mobile agent(s).

At step 303, the matching module 211 carries out a match between customer needs extracted at step 301 and agent profiles.

At step 303a, the matching module 211 identifies and selects a mobile agent based on matched customer needs and agent profile. In an embodiment, the matching module identifies and selects a mobile agent possessing skillset complimentary to customer needs as identified at step 301.

At step 304, the assignment module 212 determines the suitability of mobile agent identified and selected by matching module 211 in step 303a. The assignment module 212 determines whether the allocation of mobile agent identified and selected by matching module 211 maintains the uniformity of the system 102 in terms of equal number of customer allocation and equal mean relationship score with respect to number of allocated customer amongst mobile agents. The assignment module 212 performs such determination by syncing with the storage module 214 to analyze the record of number of customers allocated and the mean relationship score of mobile agent identified by matching module 211 at a given time.

For an illustration, If the total no. of customers to be assigned for a pre-determined period amongst mobile agent be 10 (ten) and the threshold mean relationship score is to be equal to M. Assuming mobile agent X has been identified for customer Y wherein mobile agent X has been assigned 7 (seven) customers and the current mean relationship score is of value P; and the customer Y has relationship score of Q. The assignment module 212 at step 304 determines that a lesser number of customers have been assigned to mobile agent X within the pre-determined time. The assignment module 211 further determines whether the new mean relationship score denoted by R of mobile agent X becomes equal to the threshold mean relation score of value M, calculated subsequent to the allocation of customer Y to mobile agent X as depicted through equation (2) and (3)

$$R = M \qquad (2)$$

$$R = (P x 7 + Q x 1)/8 \qquad (2)$$

The equation (3) can be alternatively written as equation (3)

$$R = (P \ x \ \text{No. of customers allocated} + Q \ x \ 1(\text{for the new customer Y})/(\text{No. of customers already allocated} + 1) \qquad (3)$$

Thus, at step 304, a step wise determination is made by the assignment module 212 as to whether the total number of assigned customers is lesser than total number of customers to be assigned to mobile agent(s). If not, then the assignment module 212 checks for the effects of another customer to the value of mean relationship score. In continuation, if the allocation of a particular customer causes the value of mean relationship score to be greater than the threshold mean relationship score, then that particular customer is not allocated to the mobile agent. And, the same decision is sent to the matching module 211. The matching module 211 again performs the process described above for step 303 to carry out another match to identify and select another mobile agent for customer allocation.

At step 305, if the step wise determination performed by the assignment module 212 for the mobile agent identified at step 304, satisfies the condition of equal number of customers to be assigned and the balancing of mean relationship score , then the mobile agent is deemed fit to be allocated to attend customer requests.

At step 306, the calendar module 213 checks the schedule of the allocated mobile agent for scheduling an appointment with the customer. The calendar module 212 further keeps a track of the applied leaves and any national or scheduled holidays while scheduling such appointments. The calendar module 213 sends a confirmation request with the duration, location of the meeting and exact timing details of appointment to agent device 103 through the network 106.

At step 307, the calendar module 213 (system 102) receives an affirmation from the mobile agent through the agent device 103. The affirmation to the calendar module 212 (system 102) is sent through the network 106 by any of the means such as email, sms or through mobile application as discussed before. In continuation, the calendar module 213 schedules an appointment of customer with the mobile agent and such information is intimated to the customer through the customer device 104.

However, if such affirmation is nor received by the calendar module 213 or the mobile agent denies the confirmation request, the process of identification of another mobile agent is initiated and the process initiates again from step 303 in a stepwise manner.

Not depicted in any flow diagram, the status module 215 analyzes the uniformity of customer allocation in real-time amongst mobile agents in terms of terms of numbers and mean relationship score to mobile agents for a predetermined period. The status module 215 keeps a check on the system 102, especially the assignment module 212 regarding the allocation of customers amongst mobile agents.

Although implementations of systems and methods for dynamic allocation of mobile agents to customers to tend to customer needs on the basis of number of customers allocated and the mean relationship score have been described in language specific to structural features and/or methods, it is to be understood that the appended claims are not necessarily limited to the specific features or methods described. Rather, the specific features and methods are disclosed as examples of implementations of dynamic allocation of mobile agents to customers for tending to customer needs as specified by the customer in the request raised.

The written description describes the subject matter herein to enable any person skilled in the art to make and use the embodiments of the invention. The scope of the subject matter embodiments defined here may include other modifications that occur to those skilled in the art. Such other modifications are intended to be within the scope if they have similar elements that do not differ from the literal language of the claims or if they include equivalent elements with insubstantial differences from the literal language.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the invention may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules comprising the system of the present disclosure and described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The various modules described herein may be implemented as either software and/or hardware modules and may be stored in any type of non-transitory computer readable medium or other storage device. Some non-limiting examples of non-transitory computer-readable media include CDs, DVDs, BLU-RAY, flash memory, and hard disk drives.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce number of times code must be retrieved from bulk storage during execution.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

## Claims

1. A computer implemented method for allocating at least one mobile agents to at least one customers carried out in steps on a system, the method comprising:

   receiving customer requests, by a receiving module, for scheduling appointments with mobile agents and evaluating the customer needs from received customer requests;

   maintaining a record, by a relationship module, of relationship scores with respect to customers and extracting relationship scores with respect to the customers;

   maintaining a record of agent profiles, by a matching module and carrying out a match between customer needs and agent profile to identify and select the mobile agent;

   determining, by an assignment module, if the mobile agent is suitable to be allocated to attend customer requests wherein such determination is carried out to allocate uniform number of customers and maintain equal mean relationship score amongst mobile agents; and

   checking, by a calendar module, for the availability of the mobile agent and only after getting confirmation from mobile agent, an appointment is scheduled.

2. The computer implemented method according to claim-1, wherein each mobile agent has an agent profile, wherein selecting the mobile agent is a function of the mobile agent profile, wherein the agent profile includes one or more of skill, a certification, a grouping, a geographic allocation and a rating associated with the mobile agent.

3. The computer implemented method according to claim-1, wherein step of identifying and selecting a mobile agent for appointment among a plurality of mobile agents is a function of customer request.

4. The computer implemented method according to claim-1, wherein customer request includes problem statement, availability place and timings of the customer, customer contact details, customer address for such appointment and consent for personal visit by mobile agent.

5. The computer implemented method according to claim-1, wherein relationship score is a function of account summary (total value of assets-both liquidated and unliquidated assets), tax summary, financial transactions, details of assets, details of loans availed, credit scoring of the customer, past credit history of the customer, Risk appetite of customer, customer present investments and future investment plans, Investment Tenure, Insurance details, activeness of customer, total income and expense statements, customer expenditure profile and growth of income per year.

6. The computer implemented method according to claim-1, wherein the mean relationship score is calculated by adding the individual scores with respect to customers allocated to a mobile agent divided by the number of customers.

7. The computer implemented method according to claim-1, further comprising;
   maintaining, by storage module, a record of the number of customers allocated to mobile agents;
   calculating and maintaining, by the storage module, a record of mean relationship score with respect to the number of customers allocated to mobile agents.

8. The computer implemented method according to claim-1, further comprising:

   calculating a threshold mean relationship score by the assignment module, and allocating customer appointments to mobile agents only if the threshold mean relationship score is equal to the mean relationship score in the event of another customer allocation;

   determining the number of customers allocated to a mobile agent by the assignment module and allocating another customer only if total number of assigned customers is lesser than total number of customers to be assigned; and

   analyzing the uniformity of customer allocation by a status module, in terms of numbers and mean relationship score to mobile agents for a pre-determined period in real-time.

9. The computer implemented method according to claim-8, wherein the threshold mean relationship score is calculated in real-time and is valid for a pre-determined period.

10. A computer implemented system for allocating at least one mobile agents to at least one customers associated with system, wherein the system comprises:

a processor;
a memory coupled to the processor, wherein the memory has system modules stored therein that are executable by the processor, the system modules comprising:

receiving module to receive customer requests for scheduling appointments with mobile agents and evaluate the customer needs from received customer requests;
relationship module to maintain a record of relationship scores with respect to customers and extracting relationship scores with respect to customers;
matching module to maintain the agent profiles and to identify and select mobile agent by carrying out a match between customer needs and agent profile;
assignment module to determine if the mobile agent is suitable to be allocated to attend customer requests wherein such determination is carried out to allocate uniform number of customers and maintain equal mean relationship score amongst mobile agents; and
calendar module to check for the availability of the mobile agent and schedule an appointment only after receiving confirmation from mobile agent.

11. The computer implemented system according to claim-10, further comprising a storage module to maintain a record of number of customer allocated to mobile agents, and calculate and maintain a record of the mean relationship score with respect to number of allocated customers to mobile agents.

12. The computer implemented system according to claim-10, further comprising a status module to:

evaluate the uniformity in the number of customers allocated amongst mobile agents, and
analyze the uniformity of mean relationship score of mobile agents with respect to the number of customers allocated.

100

SYSTEM 102

NETWORK 106

AGENT DEVICE 103

CUSTOMER DEVICE 104

Figure 1

SYSTEM 102

PROCESSOR(S) 202    INTERFACE(S) 204

MEMORY 206

SYSTEM MODULES 207

RECEIVING MODULE 209    RELATIONSHIP MODULE 210

MATCHING MODULE 211    ASSIGNMENT MODULE 212

CALENDAR MODULE 213    STORAGE MODULE 21 4

STATUS MODULE 215

SYSTEM DATA 208

DATASTORE 220

OTHER DATA 230

Figure 2

Customer request received ⟋⎯301

Relationship score extracted ⟋⎯302

Customer needs and agent profiles matched ⟋⎯303

Identification of Mobile agent ⟋⎯303a

Is the mobile agent suitable to be assigned? ⟋⎯304

No

Yes

Mobile agent deemed fit for allocation ⟋⎯305

Is the mobile agent available? ⟋⎯306

No

Yes

Appointment scheduled with customer ⟋⎯307

Figure 3

Europäisches
Patentamt

European
Patent Office

Office européen
des brevets

# EUROPEAN SEARCH REPORT

**Application Number**

EP 16 15 3998

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/249878 A1 (KAUFMAN AARON [US]) 4 September 2014 (2014-09-04) * abstract; figures * ----- | 1-12 | INV. G06Q10/10 |
| X | US 2014/254790 A1 (SHAFFER SHMUEL [US] ET AL) 11 September 2014 (2014-09-11) * abstract; figure 2 * * paragraph [0015] * ----- | 1-12 | |
| X | US 2007/015495 A1 (WINTER GREGORY J [US] ET AL) 18 January 2007 (2007-01-18) * paragraphs [0004], [0009] - [0014], [0043] * ----- | 1-12 | |

**TECHNICAL FIELDS SEARCHED (IPC)**

G06Q

The present search report has been drawn up for all claims

| Place of search | Date of completion of the search | Examiner |
|---|---|---|
| Munich | 24 March 2016 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 121 777 A1

## ANNEX TO THE EUROPEAN SEARCH REPORT
## ON EUROPEAN PATENT APPLICATION NO.

EP 16 15 3998

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2016

| Patent document cited in search report | | Publication date | Patent family member(s) | | Publication date |
|---|---|---|---|---|---|
| US 2014249878 | A1 | 04-09-2014 | US | 2014249878 A1 | 04-09-2014 |
| | | | WO | 2014138047 A1 | 12-09-2014 |
| US 2014254790 | A1 | 11-09-2014 | US | 2014254790 A1 | 11-09-2014 |
| | | | US | 2015207938 A1 | 23-07-2015 |
| US 2007015495 | A1 | 18-01-2007 | US | 2007015495 A1 | 18-01-2007 |
| | | | US | 2007015518 A1 | 18-01-2007 |
| | | | WO | 2007011839 A2 | 25-01-2007 |

EPO FORM P0459

For more details about this annex : see Official Journal of the European Patent Office, No. 12/82

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 2734MUM2015